# FASCICULE DE BREVET EUROPEEN

(11) **EP 3 347 689 B1**
(45) Date de publication et mention de la délivrance du brevet: **13.07.2022**
(21) Numéro de dépôt: 16769885.1
(22) Date de dépôt: 07.09.2016
(51) Int. Cl.: E21B 17/00, F16L 55/07, F16L 55/115, G01M 3/02

(54) **ENSEMBLE POUR TEST EN PRESSION COMPRENANT UN BOUCHON ET UN COMPOSANT FILETÉ TUBULAIRE SUPÉRIEUR**
DRUCKPRÜFANORDNUNG MIT EINEM STECKER UND EINEM VERBESSERTEN ROHRGEWINDEKOMPONENT
PRESSURE TEST ASSEMBLY COMPRISING A PLUG AND AN IMPROVED TUBULAR THREADED COMPONENT

(30) Priorité: 07.09.2015 FR 1558271
(43) Date de publication de la demande: 18.07.2018
(73) Titulaire: Vallourec Oil and Gas France, 59620 Aulnoye-Aymeries (FR)
(72) Inventeur: PUSARD, Mickael, 25230 Vandoncourt (FR)
(74) Mandataire: Casalonga
(86) Numéro de dépôt international: PCT/EP2016/071102
(87) Numéro de publication internationale: WO 2017/042226

(56) Documents cités:
- EP-A1- 1 924 832
- FR-A1- 2 844 023
- US-A- 4 770 448
- US-A- 5 505 502
- US-A1- 2007 029 798

## Description

L'invention concerne un ensemble pour test en pression comprenant un bouchon et un composant tubulaire, le bouchon étant adapté au composant tubulaire, et plus particulièrement pour des tests destinés à être effectués sur des composants tubulaires pourvus à l'une de leur extrémité d'une portion filetée et d'une portée d'étanchéité.

Pour constituer des colonnes de tubes de cuvelage ou de production ou des trains de tiges de forage pour les puits d'hydrocarbures ou pour des puits similaires, des joints filetés tubulaires dits supérieurs (ou "premium") ont été développés. Un joint fileté supérieur est formé par la coopération entre une extrémité filetée supérieure mâle d'un premier composant tubulaire et une extrémité filetée supérieure femelle d'un deuxième composant tubulaire.

Une extrémité filetée supérieure mâle comprend un filetage, une extrémité libre, une portée d'étanchéité formée entre le filetage et l'extrémité libre, la portée d'étanchéité pouvant être à distance non nulle de ladite extrémité libre. Une lèvre annulaire peut être prévue entre le filetage et la portée d'étanchéité, et / ou entre la portée d'étanchéité et l'extrémité libre. La portée d'étanchéité est destinée à coopérer avec une portée d'étanchéité complémentaire d'une extrémité filetée supérieure femelle par une interférence métal-métal. L'extrémité libre peut former une butée axiale de vissage. La portée d'étanchéité et la portée d'étanchéité complémentaire peuvent présenter des profils différents, notamment dans un exemple où l'une de ces portée développe une surface tronconique tandis que sa complémentaire développe une surface torique.

Ces joints filetés étant qualifiés en eux mêmes, et leur performance étant acquise, il est nécessaire de pouvoir tester la performance, et notamment la résistance à la pression du composant tubulaire lui-même, indépendamment du joint. L'invention est plus particulièrement utile à la réalisation de tels tests, en permettant de garantir l'absence de conséquences des tests sur l'extrémité filetée supérieure. En effet, il serait dommageable de confirmer la qualité du tube, en perdant la qualité recherchée de l'extrémité filetée supérieure qu'il comporte.

Un composant tubulaire à tester, auquel on doit faire subir une épreuve d'étanchéité en pression intérieure, peut être par exemple un accessoire (vanne de sécurité, dispositif de suspension de colonne, réducteur de section de colonne), ou un sous-ensemble tubulaire, destiné à être inséré par vissage dans une colonne tubulaire d'un puits d'hydrocarbures. Les tests peuvent être réalisés à l'eau, au gaz ou encore avec d'autres fluides, par exemple une huile.

Dans l'état de la technique, on connaît des documents US-2663183 et US-4407171 des bouchons pour réaliser des tests d'étanchéité destinés à coopérer avec des portions filetées femelles, ces portions filetées n'étant pas supérieures comme décrit ci-dessus.

En outre, le document US 2007/029798 décrit un raccord d'extrémité comprenant un corps d'étanchéité adapté pour recevoir un élément de tuyau, qui comprend une partie filetée extérieurement. Le corps d'étanchéité comprend une section filetée intérieurement, qui est plus courte que la partie filetée extérieurement de l'élément de tuyau. Un dispositif de retenue de joint est placé dans une rainure annulaire réalisée dans le corps d'étanchéité. Le dispositif de retenue de joint est adopté pour entrer en contact avec la partie filetée extérieurement de l'élément de tuyau avant. Une fois le contact effectué, les parties filetées opposées du corps d'étanchéité et de l'élément de tuyau sont engagées.

On connaît par ailleurs du document EP-1924832 un procédé de test adapté à des extrémités filetées supérieures mâle et femelle permettant de réaliser des tests à de très hautes pressions. Ce document enseigne notamment de visser un bouchon en combinaison avec un filetage mâle de l'extrémité de manière à comprimer axialement un anneau d'étanchéité du bouchon entre une butée axiale de l'extrémité et le fond du bouchon, pour établir ensuite une pression d'essai à l'intérieur du composant portant ladite extrémité filetée. Bien que satisfaisant, ce type de bouchon ne permet pas de réaliser des tests sur tous les types d'extrémités filetées supérieures. Notamment lorsqu'un tel bouchon est utilisé sur une extrémité filetée mâle du type de celle enseignée dans les documents EP- 2212510 et WO-2013/108931, les fuites au travers du joint sont importantes.

L'objet de l'invention est de fournir une solution de test satisfaisante, à la fois pour les portions filetées supérieures dépourvues de butée axiale, et également adaptée aux portions filetées supérieures dont la butée axiale est aménagée de manière à proposer un chemin de fuite. En alternative à la recherche standard d'un compromis optimal entre les caractéristiques de dureté et d'élasticité des anneaux d'étanchéité, l'invention a eu pour objet de proposer une solution nouvelle et efficace au problème posé, sans générer de surcoût.

L'invention selon la revendication 1 vise donc un ensemble pour test en pression comprenant un bouchon et un composant tubulaire, le bouchon étant adapté au composant tubulaire, le composant tubulaire comportant à une extrémité libre un élément fileté mâle, tel que l'élément fileté mâle comporte un filetage mâle et une surface d'étanchéité, le bouchon comportant un filetage compatible avec le filetage mâle, une gorge annulaire intérieure et un anneau d'étanchéité retenu dans ladite gorge de telle sorte que l'anneau d'étanchéité est comprimé radialement entre un pourtour extérieur de l'élément fileté mâle et un fond de ladite gorge annulaire intérieure.

En particulier, ladite gorge annulaire peut être disposée, en position assemblée avec ledit composant tubulaire, en regard d'une portion située entre le filetage mâle et l'extrémité libre, notamment à distance non nulle du filetage mâle.

De préférence, ladite gorge annulaire peut être disposée, en position assemblée avec ledit composant tubulaire, en regard d'une portion située entre la surface d'étanchéité et l'extrémité libre.

En particulier un fond de cette gorge peut présenter une portion de surface tronconique. Ledit fond selon l'invention présente une inclinaison identique à celle d'une lèvre située entre une portion tronconique portant la surface d'étanchéité et l'extrémité libre, cette lèvre ayant une inclinaison inférieure à celle de la portion tronconique. Ces caractéristiques permettent d'améliorer l'homogénéité de la compression de l'anneau d'étanchéité.

Avantageusement, l'anneau d'étanchéité peut présenter un premier tronçon comportant un pourtour radialement intérieur et un pourtour radialement extérieur, les pourtours étant notamment concentriques et homothétiques. Dans une telle configuration, l'inclinaison des pourtours intérieur et extérieur concentriques du premier tronçon peut être identique à celle de la lèvre.

En particulier, la gorge annulaire peut être disposée, en position assemblée avec ledit composant tubulaire, en regard de la portion tronconique en partie sur la surface d'étanchéité.

Par exemple, l'anneau d'étanchéité peut comporter un deuxième tronçon comportant respectivement un pourtour radialement intérieur et un pourtour radialement extérieur, tel que le pourtour radialement intérieur de ce deuxième tronçon présente une inclinaison identique à celle la portion tronconique portant la la surface d'étanchéité.

L'anneau d'étanchéité peut également comporter un troisième tronçon présentant un pourtour intérieur chanfreiné servant de détrompeur pour le positionnement correct de l'anneau dans la gorge. Ce pourtour intérieur chanfreiné permet également d'assurer un meilleur engagement du composant tubulaire dans le bouchon qui permet aussi d'éviter que l'extrémité libre du composant tubulaire ne vienne déloger l'anneau d'étanchéité de sa gorge.

De manière avantageuse, le bouchon peut comporter une surface intérieure tronconique entre le filetage compatible et la gorge de telle sorte que cette surface intérieure tronconique soit à une distance diamétrale non nulle, et par exemple supérieure à 0,05 mm relativement à la surface d'étanchéité en regard de laquelle ladite surface intérieure tronconique est située en position assemblée. L'existence de cette distance diamétrale non nulle permet de limiter l'expansion de l'extrémité du composant tubulaire lors de sa mise en pression, et également d'éviter les contacts entre le composant tubulaire à tester et le bouchon lors du vissage et dévissage du bouchon. La surface intérieure tronconique offre une surface de support statique pour la surface d'étanchéité de l'élément fileté mâle.

Selon un mode de réalisation, l'anneau d'étanchéité peut être réalisé dans un matériau de dureté comprise entre 90 et 100 ShoreA, notamment en polyuréthane ou en teflon^{®}.

Pour faciliter la mise en place, et aider à l'identification d'une fin de vissage du bouchon sur l'élément fileté, le bouchon peut comporter une surface de butée axiale intérieure pour venir en contact avec l'extrémité libre du composant tubulaire.

Plus particulièrement, dans le cas où le filetage mâle est de type trapézoïdal, alors le filetage compatible est également de type trapézoïdal, mais peut être distinct d'un filetage complémentaire de ce filetage mâle en ce que la coopération entre le filetage mâle et le filetage compatible ne crée aucune interférence radiale avec les fonds et les sommets de filets dudit filetage mâle. L'utilisation d'un filetage compatible, et non complémentaire, permet de préserver l'intégrité du filetage pendant la réalisation du test.

Plus particulièrement, et étant donné la pression à laquelle les tests sont réalisés, le filetage compatible et la gorge peuvent être avantageusement formés dans un corps métallique du bouchon.

L'avantage de la solution de l'invention est qu'elle fournit un bouchon réutilisable et facile à visser manuellement.

La présente invention sera mieux comprise à l'étude de la description détaillée d'un mode de réalisation pris à titre d'exemple nullement limitatif et illustré par des dessins annexés, sur lesquels :
- la figure 1 est une vue en coupe longitudinale d'un bouchon selon l'invention assemblé à un composant tubulaire à tester en pression ;
- la figure 2 est une vue du détail A de la Figure 1 ;
- la figure 3 est une vue de dessus d'un bouchon selon l'invention ;
- la figure 4 est une vue du détail A du bouchon selon l'invention dépourvu de l'anneau d'étanchéité ;
- la figure 5 est une vue en coupe longitudinale de l'anneau d'étanchéité d'un bouchon selon l'invention ;
- la figure 6 est une vue de détail, en coupe longitudinale, d'une variante de réalisation d'un bouchon selon l'invention assemblé à un composant tubulaire à tester en pression.

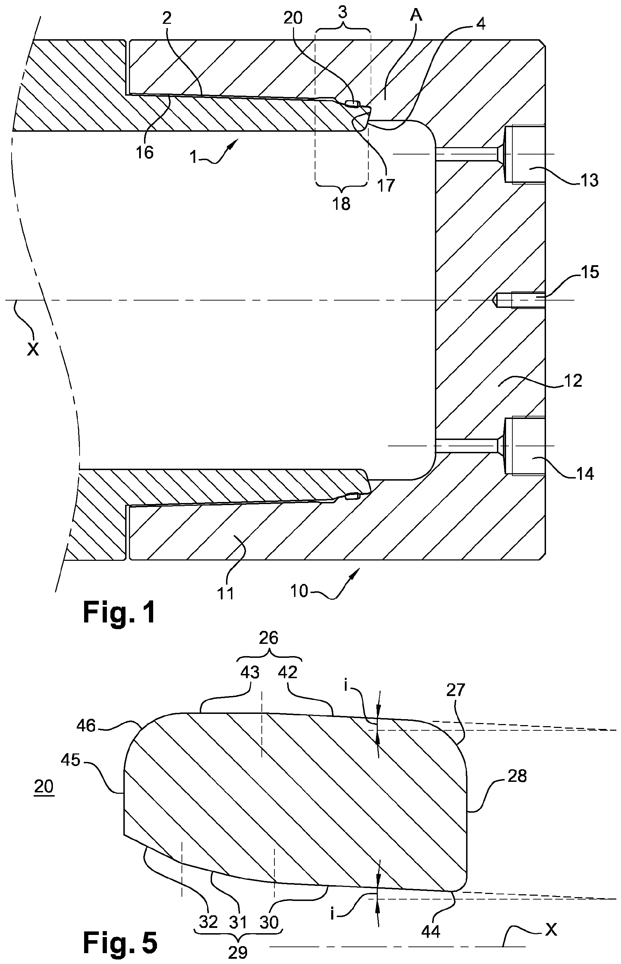

La figure 1 représente un élément fileté mâle 1 d'un composant tubulaire devant subir un essai en pression. Le composant tubulaire est ici représenté creux. Sans que cela soit détaillé à la figure 1, le composant tubulaire est débouchant par ses deux extrémités axialement opposées, relativement à un axe de révolution X dudit composant tubulaire. Dans ce cas, pour la réalisation d'un test de mise en pression, il est nécessaire que la deuxième extrémité soit également obturée de manière étanche, par exemple au moyen d'un bouchon selon l'invention.

Cet élément fileté mâle 1 est pourvu d'un filetage mâle conique 2 ainsi que d'une zone non filetée 3 disposée au delà du filetage 2 en allant vers une extrémité libre 4 de l'élément fileté 1. Le filetage 2 est destiné à l'assemblage ultérieur avec un autre composant tubulaire dans une colonne tubulaire devant équiper un puits d'hydrocarbures.

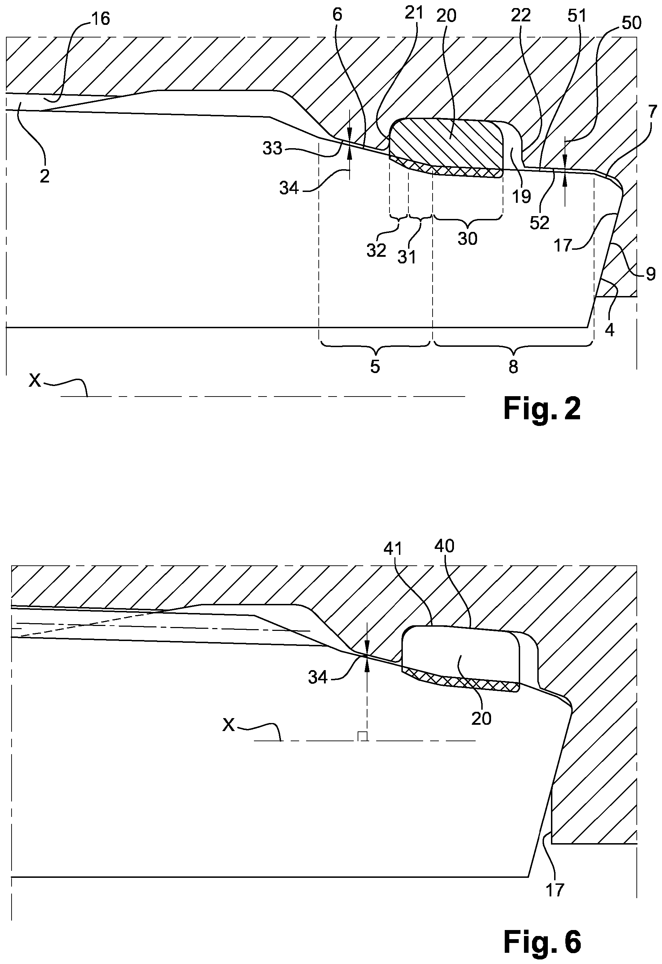

La surface radialement externe de la zone non filetée 3 comprend, Figure 2, entre le filetage 2 et l'extrémité libre 4, une partie tronconique 5 portant une surface d'étanchéité 6. La surface d'étanchéité 6 est destinée à venir en interférence avec une surface complémentaire afin de créer une étanchéité métal-métal lorsque le composant tubulaire à tester est assemblé à un composant tubulaire complémentaire. Entre la partie tronconique 5 et l'extrémité libre 4, la surface radialement externe de l'élément fileté 1 comprend une lèvre annulaire 8 et un nez 7. La lèvre annulaire 8 peut être cylindrique ou tronconique, mais dans ce dernier cas, l'inclinaison de la portion tronconique de la lèvre est inférieure à l'inclinaison de partie tronconique 5. Le nez 7 assure le raccordement avec une surface d'extrémité 9 de l'extrémité libre 4, cette surface d'extrémité 9 formant une surface de butée axiale lorsque le composant est assemblé avec un composant complémentaire.

La figure 1 montre par ailleurs un bouchon de test 10 destiné à isoler l'espace intérieur du composant qui doit être essayé en pression. Ce bouchon 10 comporte un corps formant une paroi 11 sensiblement tubulaire destinée à être montée autour de l'élément fileté mâle 1. Le corps du bouchon est de préférence réalisé en métal. Le bouchon 10 comporte également un fond transversal 12 à la paroi tubulaire. Le fond est traversé par une amenée 13 et une sortie 14 de fluide sous pression.

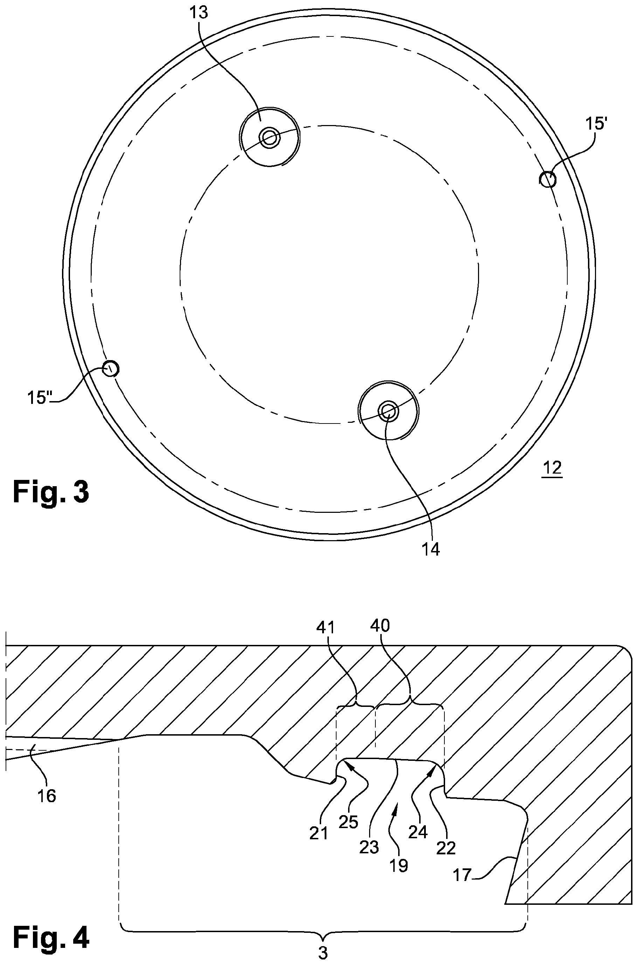

Le fond transversal 12 est également muni extérieurement d'au moins un point d'ancrage 15. Selon la Figure 3, le fond 12 comporte deux points d'ancrage 15' et 15" ici diamétralement opposés, et situés à distance du centre de ce fond 12 pour éviter la création de zone de fragilité et permettre la fixation dans ces points d'ancrage d'un outil de levage.

La paroi tubulaire 11 est munie sur son pourtour intérieur d'un filetage femelle conique 16. Le filetage femelle 16 est compatible avec le filetage mâle 2 de manière à permettre un vissage à la main du bouchon 10 sur l'élément 1, par exemple à l'aide d'une clef à chaîne assurant un couple de vissage inférieur à 1000 N.m, de préférence autour de 200 N.m.

La paroi tubulaire 11 comporte un décrochement intérieur formant un épaulement 17 annulaire intérieur. L'épaulement 17 annulaire intérieur du bouchon est destiné à coopérer en tant que butée de fin de vissage avec la surface de butée 9. L'épaulement 17 est sensiblement de même conicité que la surface de butée 9, qui vient en regard de celle-ci lors du vissage comme on le voit sur la figure 2. L'épaulement 17 peut venir en interaction avec une fraction seulement de la surface de butée 9, dans la mesure où la mise en position du bouchon 10 sur l'élément fileté 1 ne nécessite pas d'appliquer un surcouple de vissage.

Entre cet épaulement 17 annulaire intérieur et le filetage compatible 16, la paroi tubulaire 11 comporte un tronçon 18. Une gorge annulaire 19 débouchant à l'intérieur du bouchon est formée dans le tronçon18. Un anneau d'étanchéité 20 est rapporté dans la gorge 19. L'anneau d'étanchéité 20 fait saillie radialement vers l'intérieur par rapport aux bordures avant 21 et arrière 22 de la gorge, saillie localisée entre ces bordures avant 21 et arrière 22. L'anneau d'étanchéité 20 présente une épaisseur supérieure à la profondeur radiale de la gorge. La gorge présente une dimension axiale, le long de l'axe X, qui est également axe de révolution du bouchon, supérieure à la dimension axiale de l'anneau d'étanchéité relativement au même axe. Le jeu axial de l'anneau d'étanchéité 20 dans la gorge 19 permet de fournir un jeu facilitant le montage et le démontage de l'anneau dans sa gorge. Ce jeu axial permet également d'absorber les variations dimensionnelles de l'anneau par rapport aux tolérances de fabrication de l'anneau et celles d'usinage de la gorge. Enfin ce jeu axial permet de tolérer une expansion axiale de l'anneau lorsque ce dernier est mis placé en compression radiale à la fin du vissage du composant tubulaire à tester avec ledit bouchon.

Figure 4, les bordures avant 21 et arrière 22 sont dressées depuis un fond 23 de la gorge 19 dans un plan sensiblement perpendiculaire à l'axe X. Le fond 23 de la gorge présente une portion de surface tronconique 40, d'une inclinaison « i » par rapport à l'axe X, et raccordé à la bordure arrière 22 par une première portion rayonnée 24. La portion de surface tronconique 40 peut représenter toute la paroi de fond 23 jusqu'à la bordure avant 21. Mais dans l'exemple représenté, et pour des besoins de faciliter l'usinage de la gorge, la portion de surface tronconique 40 ne représente qu'une partie du fond 23, le fond 23 comportant une portion cylindrique 41 dans le prolongement de la portion de surface tronconique 40, cette portion cylindrique 41 se raccordant à la bordure avant 21 par une deuxième portion rayonnée 25. La première portion rayonnée 24 présente un rayon de courbure supérieur à celui de la portion rayonnée 25, afin de limiter la concentration de contraintes en cet emplacement lors de la réalisation du test.

Pour des raisons pratiques, la portion cylindrique 41 peut s'étendre sur une distance axiale figée, quelque soit la taille du bouchon, par exemple de l'ordre de 2,5 mm.

L'anneau d'étanchéité 20 présente un pourtour radialement extérieur 26 comportant une portion inclinée 42, ici de la même inclinaison « i » que celle de la portion tronconique 40 du fond 23. Pour coopérer de manière uniforme avec le fond, dans la mesure où le test en pression va conduire l'anneau d'étanchéité 20 à être repoussé en direction de la bordure avant 21 de la gorge, le pourtour radialement extérieur 26 comporte une portion cylindrique 43 pour coopérer avec la portion cylindrique 41 du fond 23.

La portion inclinée 42 du pourtour radialement extérieur 26 est reliée par une première portion rayonnée 27 à une première face transversale 28 à l'axe de révolution de l'anneau, qui a vertu à se confondre avec l'axe X en position assemblée. La première face transversale 28 est reliée à un pourtour radialement intérieur 29 de l'anneau. Le pourtour radialement intérieur 29 se décompose en 3 portions successives 30, 31 et 32. Les portions 30, 31 et 32 sont telles que l'inclinaison de la première portion 30 est inférieure à celle de la deuxième portion 31, qui est elle-même inférieure à celle de la troisième portion 32.

La première portion 30 se raccorde via un rayon de raccordement 44 à la première face transversale 28. Elle présente une inclinaison qui est sensiblement de même valeur que l'inclinaison « i » de la portion inclinée 42 du pourtour radialement extérieur 26. Cette inclinaison « i » est choisie sensiblement égale à l'inclinaison de la portion de la lèvre 8 en regard de laquelle cette portion 30 est placée en position assemblée. La portion 30 est configurée de manière à subir une contrainte en pression isotrope et homogène.

La rupture de pente entre la première portion 30 et la deuxième portion 31 est configurée pour être disposée à la jonction entre la portion tronconique 5 et la lèvre 8, afin de limiter la translation de l'anneau. La pente de la deuxième portion 31 est sensiblement égale à celle de la portion tronconique 5 afin de permette une compression homogène de l'anneau d'étanchéité 20.

La rupture de pente entre la deuxième portion 31 et la troisième portion 32 sert également de détrompeur visuel pour une insertion correcte de l'anneau d'étanchéité dans la gorge 19. La troisième portion 32 est raccordée à une deuxième face transversale 45, parallèle à la première face transversale 28, qui se raccorde avec la portion cylindrique 43 du pourtour radialement extérieur 26. Le rayon de raccordement 46 entre la deuxième face transversale 45 et la portion cylindrique 43 est plus grand que celui de la deuxième portion rayonnée 25, afin d'absorber les variations dimensionnelles liées aux tolérances d'usinage respectives entre la gorge 19 et l'anneau d'étanchéité 20.

En position assemblée, comme cela est visible à la figure 2, la portion de l'anneau qui est représentée dans la matière de l'élément 1 est en pratique complètement contenue dans le volume défini entre le pourtour extérieur de l'élément mâle 1 et le fond 23 de la gorge. La partie superposée correspond à la compression effective absorbée par la matière de l'anneau d'étanchéité 20, et qui conduit notamment à sa déformation axiale dans la gorge 19. Dans cette position, l'anneau d'étanchéité 20 est comprimé radialement, par exemple à un taux de 20 % de manière à garantir l'étanchéité de l'assemblage du bouchon et du composant à tester.

La bordure avant 21 se raccorde à une surface intérieure tronconique 33 adaptée pour être mise en regard, en position assemblée de la surface d'étanchéité 6. Avant le début du test, un jeu 34 est prévu entre la surface d'étanchéité 6 et la surface intérieure tronconique 33 adjacente à la gorge 19. Le jeu 34 est suffisamment faible pour empêcher un fluage de l'anneau d'étanchéité dans cet espace. Par ailleurs, ce jeu 34 est suffisant pour que, sous l'effet de la pression d'essai, la surface d'étanchéité 6 vienne en appui sur ladite surface en regard pratiquement sans subir de déformation plastique.

Par "pratiquement sans avoir subi de déformation plastique", on entend négliger une légère déformation plastique qui pourrait être détectée par des moyens de mesure sensibles mais n'aurait pas d'incidence sur les caractéristiques d'utilisation du composant concerné.

Le jeu 34 a une valeur au moins égale à 0,05 mm en jeu diamétral. Ladite valeur peut représenter en jeu diamétral au plus 0,3 % du diamètre nominal extérieur du composant tubulaire. Le jeu peut être au maximum de 0,2 mm.

Un jeu similaire 50, notamment de dimensionnement radial identique au jeu 34, peut également être réalisé entre la portion 51 de la lèvre 8 et le nez 7 qui se trouve radialement en regard d'une paroi tubulaire interne 52 du bouchon. Le jeu 50 permet également de limiter l'expansion radiale de l'extrémité filetée mâle testée.

Une variante de réalisation d'un bouchon selon l'invention est représentée Figure 6. Selon cette variante, la lèvre 8 est courte au point tel que l'intégralité de la lèvre 8 est en regard de la gorge 19. La gorge 19 est même en partie en regard d'une partie du nez 7. Selon cette configuration, et pour faciliter les manœuvres d'usinage radial, l'épaulement annulaire 17 est tronqué, et propose ainsi une surface de contact inférieure avec l'extrémité libre 4 que celle prévue dans le premier mode de réalisation décrit sur les Figures 1 et 2 notamment.

## Revendications

1. Ensemble pour test en pression comprenant un bouchon (10) et un composant tubulaire, le bouchon (10) étant adapté au composant tubulaire, le composant tubulaire comportant à une extrémité libre (4) un élément fileté mâle (1), tel que l'élément fileté mâle comporte un filetage mâle (2) et une surface d'étanchéité (6), le bouchon comportant un filetage compatible (16) avec le filetage mâle, une gorge annulaire intérieure (19) et un anneau d'étanchéité (20) retenu dans ladite gorge de telle sorte que le l'anneau d'étanchéité est comprimé radialement entre un pourtour extérieur de l'élément fileté mâle et un fond (23) de ladite gorge annulaire intérieure, ledit bouchon (10) étant **caractérisé en ce que** le fond de la gorge présente une inclinaison identique à celle d'une lèvre (8) du composant tubulaire située entre une portion tronconique (5) portant la surface d'étanchéité (6) et l'extrémité libre (4), cette lèvre ayant une inclinaison inférieure à celle de la portion tronconique.

2. Ensemble selon la revendication 1 **caractérisé en ce que** ladite gorge annulaire est disposée, en position assemblée avec ledit composant tubulaire, en regard d'une portion située entre le filetage mâle et l'extrémité libre, notamment à distance non nulle du filetage mâle.

3. Ensemble selon l'une quelconque des revendications précédentes **caractérisé en ce que** ladite gorge annulaire est disposée, en position assemblée avec ledit composant tubulaire, en regard d'une portion située entre la surface d'étanchéité et l'extrémité libre.

4. Ensemble selon l'une quelconque des revendications précédentes **caractérisé en ce que** le fond de la gorge comporte une portion de surface tronconique.

5. Ensemble selon l'une quelconque des revendications précédentes **caractérisé en ce que** l'anneau d'étanchéité présente un premier tronçon comportant un pourtour radialement intérieur (30) et un pourtour radialement extérieur, les pourtours étant concentriques et homothétiques.

6. Ensemble selon les revendications 1 et 5, **caractérisé en ce que** l'inclinaison des pourtours intérieur et extérieur concentriques du premier tronçon est identique à celle de la lèvre.

7. Ensemble selon l'une quelconque des revendications 1 ou 6 **caractérisé en ce que** la gorge annulaire est disposée, en position assemblée avec ledit composant tubulaire, en regard de la portion tronconique (5), en partie sur la surface d'étanchéité (6).

8. Ensemble selon la revendication 7, **caractérisé en ce que** l'anneau d'étanchéité comporte un deuxième tronçon comportant respectivement un pourtour radialement intérieur et un pourtour radialement extérieur, tel que le pourtour radialement intérieur (31) de ce deuxième tronçon présente une inclinaison identique à celle la portion tronconique (5) portant la surface d'étanchéité (6).

9. Ensemble selon l'une quelconque des revendications précédentes **caractérisé en ce que** l'anneau d'étanchéité comporte un troisième tronçon présentant un pourtour intérieur chanfreiné (32) servant de détrompeur pour le positionnement correct de l'anneau dans la gorge.

10. Ensemble selon l'une quelconque des revendications précédentes **caractérisé en ce qu'**il comporte une surface intérieure tronconique (33) entre le filetage compatible et la gorge de telle sorte que cette surface intérieure tronconique soit à une distance diamétrale (34) non nulle, par exemple supérieure à 0,05 mm relativement à la surface d'étanchéité, en regard de laquelle ladite surface intérieure tronconique est située en position assemblée.

11. Ensemble selon l'une quelconque des revendications précédentes **caractérisé en ce que** l'anneau d'étanchéité est réalisé dans un matériau de dureté comprise entre 90 et 100 ShoreA, notamment en polyuréthane ou en teflon^{®}.

12. Ensemble selon l'une quelconque des revendications précédentes **caractérisé en ce qu'**il comporte une surface de butée axiale intérieure (17) pour venir en contact avec l'extrémité libre du composant tubulaire.

13. Ensemble selon l'une quelconque des revendications précédentes **caractérisé en ce que** le filetage mâle est de type trapézoïdal, et **en ce que** le filetage compatible est distinct d'un filetage complémentaire de ce filetage mâle **en ce que** la coopération entre le filetage mâle et le filetage compatible ne crée aucune interférence radiale entre le fond et les sommets de filets des filetages.

14. Ensemble selon l'une quelconque des revendications précédentes **caractérisé en ce que** le filetage compatible et la gorge sont formés dans un corps métallique du bouchon.

## Patentansprüche

1. Druckprüfanordnung, umfassend einen Stopfen (10) und eine rohrförmige Komponente, wobei der Stopfen (10) an die rohrförmige Komponente angepasst ist, wobei die rohrförmige Komponente an einem freien Ende (4) ein Außengewindeelement (1) aufweist, so dass das Außengewindeelement ein Außengewinde (2) und eine Dichtfläche (6) aufweist, wobei der Stopfen ein mit dem Außengewinde kompatibles Gewinde (16), eine innere ringförmige Nut (19) und einen in der Nut gehaltenen Dichtring (20) aufweist, so dass der Dichtring radial zwischen einem Außenumfang des Außengewindeelements und einem Boden (23) der inneren ringförmigen Nut komprimiert wird, wobei der Stopfen (10) **dadurch gekennzeichnet ist, dass** der Boden der Nut eine Neigung aufweist, die mit der einer Lippe (8) der rohrförmigen Komponente, die sich zwischen einem kegelstumpfförmigen Abschnitt (5), der die Dichtfläche (6) trägt, und dem freien Ende (4) befindet, identisch ist, wobei die Lippe eine Neigung aufweist, die kleiner als die des kegelstumpfförmigen Abschnitts ist.

2. Anordnung nach Anspruch 1, **dadurch gekennzeichnet ist, dass** die ringförmige Nut in der mit der rohrförmigen Komponente zusammengefügten Position gegenüber einem Abschnitt, der sich zwischen dem Außengewinde und dem freien Ende befindet, insbesondere in einem Abstand ungleich Null zum Außengewinde angeordnet ist.

3. Anordnung nach einem der vorangehenden Ansprüche, **dadurch gekennzeichnet, dass** die ringförmige Nut in der mit der rohrförmigen Komponente zusammengefügten Position gegenüber einem Abschnitt, der sich zwischen der Dichtfläche und dem freien Ende befindet, angeordnet ist.

4. Anordnung nach einem der vorangehenden Ansprüche, **dadurch gekennzeichnet, dass** der Boden der Nut einen Abschnitt mit kegelstumpfförmiger Oberfläche aufweist.

5. Anordnung nach einem der vorangehenden Ansprüche, **dadurch gekennzeichnet, dass** der Dichtring ein erstes Teilstück mit einem radial inneren Umfang (30) und einem radial äußeren Umfang aufweist, wobei die Umfänge konzentrisch und homothetisch sind.

6. Anordnung nach Anspruch 1 und 5, **dadurch gekennzeichnet, dass** die Neigung des inneren Umfangs und des äußeren Umfangs, die konzentrisch sind, identisch mit der der Lippe ist.

7. Anordnung nach einem der Ansprüche 1 oder 6, **dadurch gekennzeichnet, dass** die ringförmige Nut in der mit der rohrförmigen Komponente zusammengefügten Position gegenüber dem kegelstumpfförmigen Abschnitt (5) teilweise auf der Dichtfläche (6) angeordnet ist.

8. Anordnung nach Anspruch 7, **dadurch gekennzeichnet, dass** der Dichtring ein zweites Teilstück mit einem radial inneren Umfang und einem radial äußeren Umfang aufweist, so dass der radial innere Umfang (31) dieses zweiten Teilstücks eine Neigung aufweist, die mit der des kegelstumpfförmigen Abschnitts (5), der die Dichtfläche (6) trägt, identisch ist.

9. Anordnung nach einem der vorangehenden Ansprüche, **dadurch gekennzeichnet, dass** der Dichtring ein drittes Teilstück mit einem abgeschrägten inneren Umfang (32) aufweist, der als Verwechselungssicherung für die korrekte Positionierung des Rings in der Nut dient.

10. Anordnung nach einem der vorangehenden Ansprüche, **dadurch gekennzeichnet, dass** sie zwischen dem kompatiblen Gewinde und der Nut eine kegelstumpfförmige Innenfläche (33) aufweist, so dass sich diese kegelstumpfförmige Innenfläche in einem diametralen Abstand (34) ungleich Null, beispielsweise von mehr als 0,05 mm, relativ zur Dichtfläche, gegenüber welcher die kegelstumpfförmige Innenfläche in der zusammengefügten Position angeordnet ist, befindet.

11. Anordnung nach einem der vorangehenden Ansprüche, **dadurch gekennzeichnet, dass** der Dichtring aus einem Material mit einer Härte zwischen 90 und 100 ShoreA, insbesondere aus Polyurethan oder Teflon^{®}, hergestellt ist.

12. Anordnung nach einem der vorangehenden Ansprüche, **dadurch gekennzeichnet, dass** sie eine axiale innere Anschlagfläche (17) aufweist, die mit dem freien Ende der rohrförmigen Komponente in Kontakt kommt.

13. Anordnung nach einem der vorangehenden Ansprüche, **dadurch gekennzeichnet, dass** das Außengewinde trapezförmig ist und dass sich das Gewinde von einem komplementären Gewinde dieses Außengewindes dadurch unterscheidet, dass das Zusammenwirken zwischen dem Außengewinde und dem kompatiblen Gewinde keine radiale Interferenz zwischen dem Boden und den Gewindespitzen des Gewindes erzeugt.

14. Anordnung nach einem der vorangehenden Ansprüche, **dadurch gekennzeichnet, dass** das kompatible Gewinde und die Nut in einem Metallkörper des Stopfens ausgebildet sind.

## Claims

1. Pressure test assembly comprising a plug (10) and a tubular component, the plug (10) being adapted to the tubular component, the tubular component having a male threaded element (1) at a free end (4), such that the male threaded element has a male screw thread (2) and a sealing surface (6), the plug having a compatible screw thread (16) compatible with the male screw thread, an inner annular groove (19) and a sealing ring (20) held in said groove such that the sealing ring is compressed radially between an outer periphery of the male threaded element and a bottom (23) of said inner annular groove, said plug (10) being **characterized in that** the bottom of the groove has an inclination identical to that of a lip (8) of the tubular component that is situated between a frustoconical portion (5) bearing the sealing surface (6) and the free end (4), this lip having an inclination less than that of the frustoconical portion.

2. Assembly according to Claim 1, **characterized in that** said annular groove is disposed, in the position assembled with said tubular component, facing a portion situated between the male screw thread and the free end, in particular at a non-zero distance away from the male screw thread.

3. Assembly according to either one of the preceding claims, **characterized in that** said annular groove is disposed, in the position assembled with said tubular component, facing a portion situated between the sealing surface and the free end.

4. Assembly according to any one of the preceding claims, **characterized in that** the bottom of the groove has a frustoconical surface portion.

5. Assembly according to any one of the preceding claims, **characterized in that** the sealing ring has a first section having a radially inner periphery (30) and a radially outer periphery, the peripheries being concentric and homothetic.

6. Assembly according to Claims 1 and 5, **characterized in that** the inclination of the concentric inner and outer peripheries of the first section is identical to that of the lip.

7. Assembly according to either one of Claims 1 and 6, **characterized in that** the annular groove is disposed, in the position assembled with said tubular component, facing the frustoconical portion (5), in part on the sealing surface (6).

8. Assembly according to Claim 7, **characterized in that** the sealing ring has a second section respectively having a radially inner periphery and a radially outer periphery such that the radially inner periphery (31) of this second section has an inclination identical to that of the frustoconical portion (5) bearing the sealing surface (6) .

9. Assembly according to any one of the preceding claims, **characterized in that** the sealing ring has a third section having a chamfered inner periphery (32) serving as a poka-yoke feature for the correct positioning of the ring in the groove.

10. Assembly according to any one of the preceding claims, **characterized in that** it has a frustoconical inner surface (33) between the compatible screw thread and the groove such that this frustoconical inner surface is at a non-zero diametral distance (34), for example a distance of more than 0.05 mm, away from the sealing surface, said frustoconical inner surface being situated facing said sealing surface in the assembled position.

11. Assembly according to any one of the preceding claims, **characterized in that** the sealing ring is made of a material with a hardness of between 90 and 100 Shore A, in particular of polyurethane or of Teflon@.

12. Assembly according to any one of the preceding claims, **characterized in that** it has an inner axial stop surface (17) to come into contact with the free end of the tubular component.

13. Assembly according to any one of the preceding claims, **characterized in that** the male screw thread is of trapezoidal type, and **in that** the compatible screw thread is distinct from a complementary screw thread of this male screw thread insofar as collaboration between the male screw thread and the compatible screw thread creates no radial interference between the thread roots and crests of the screw threads.

14. Assembly according to any one of the preceding claims, **characterized in that** the compatible screw thread and the groove are formed in a metallic body of the plug.
